(19) Europäisches Patentamt
European Patent Office
Office européen des brevets

(11) **EP 3 371 260 B1**

(12) **EUROPÄISCHE PATENTSCHRIFT**

(45) Veröffentlichungstag und Bekanntmachung des Hinweises auf die Patenterteilung:
**30.10.2019 Patentblatt 2019/44**

(21) Anmeldenummer: **16790991.0**

(22) Anmeldetag: **03.11.2016**

(51) Int Cl.:
***C09D 7/00*** *(2018.01)*

(86) Internationale Anmeldenummer:
**PCT/EP2016/076476**

(87) Internationale Veröffentlichungsnummer:
**WO 2017/076934 (11.05.2017 Gazette 2017/19)**

(54) **TRÄGERMEDIUM ZUR ABTRENNUNG VON LACK-OVERSPRAY**

CARRIER MEDIUM FOR REMOVING VARNISH-OVERSPRAY

MILIEU DE SUPPORT DE SUPPRESSION D'EXCÈS DE PROJECTION DE PEINTURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.11.2015 EP 15003191**

(43) Veröffentlichungstag der Anmeldung:
**12.09.2018 Patentblatt 2018/37**

(73) Patentinhaber: **Henkel AG & Co. KGaA**
**40589 Düsseldorf (DE)**

(72) Erfinder: **KOLT, Christian**
**40545 Düsseldorf (DE)**

(56) Entgegenhaltungen:
**EP-A1- 2 365 037      WO-A1-2010/025810**
**CA-A1- 2 096 324      GB-A- 2 400 052**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft die Verwendung eines Wasser-basierten Trägermediums zur Nassauswaschung von Lack-Overspray aus der Umluft von Lackierkabinen, wobei das Trägermedium zumindest 50 Gew.-% an polyfunktionellen organischen Oxo-Verbindungen enthält, die wiederum zumindest zu 80 Gew.-% bezogen auf die Gesamtmenge der polyfunktionellen organischen Oxo-Verbindungen ausgewählt sind aus niedermolekularen Verbindungen mit nicht mehr als 12 Kohlenstoffatomen. Das Trägermedium zeichnet dabei dadurch aus, dass die Viskosität desselben über einen weiten Bereich an Scherbeanspruchungen in einem vorgegebenen Korridor liegt, so dass ein zeitlich homogenes, nahezu laminares Abfließen des Trägermediums von den Abscheideflächen einer Anlage zur Nassauswaschung gewährleistet ist. In einem weiteren Aspekt umfasst die vorliegende Erfindung ein Verfahren zur Nassauswaschung unter Verwendung des zuvor genannten Trägermediums.

In Lackierbetrieben, insbesondere im Automobilbau, werden üblicherweise ein- oder mehrere lösungsmittel- oder wasserbasierte Lackschichten auf die Bauteile aufgespritzt. Bei einer solchen Applikation von Lacken, Wachsen oder ähnlichen, nicht wasserlöslichen organischen Beschichtungsmitteln auf metallische Oberflächen oder Kunststoffoberflächen gelingt es nicht, die Lacke bzw. Beschichtungsmittel restlos auf die zu beschichtenden Teile aufzubringen. Derjenige Anteil des Lacks, der sich nicht wie erwünscht auf den Bauteilen niederschlägt und aus der Umluft entfernt werden muss, wird als Lack-Overspray bezeichnet. Der Lack-Overspray wird zur Abtrennung aus der Umluft in ein flüssiges Trägermedium, meistens wasserbasiert, eingebracht ("Nassauswaschung") und nach dem Entkleben und der Koagulation der partikulären Lackbestandteile aus dem Trägermedium entfernt und weiter verwertet. Dieser Nassauswaschung des Lack-Oversprays folgt je nach Anlagenkonfiguration und Verfahrensführung die Abtrennung der entklebten und koagulierten Lackpartikel durch Flotation oder Sedimentation in einem hierfür angelegten Systembecken, in das das mit dem Lack-Overspray angereicherte Trägermedium überführt wird. Die Austragung des Koagulats aus dem Trägermedium erfolgt im Systembecken kontinuierlich und mit geeigneten Austragvorrichtungen und/oder Separatoren. Das an Koagulat abgereicherte Trägermedium wird wiederum kontinuierlich in die Abscheidevorrichtung der Lackierkabine zur Nassauswaschung zurückgespeist, so dass ein Kreislaufsystem realisiert ist.

Die Nassauswaschung des Lack-Oversprays in der Lackierkabine erfolgt häufig durch die turbulente Vermischung von flüssigem Trägermedium und dem Aerosol des "Oversprays" mittels einer Venturi-Öffnung im Umluftkanal der Lackierkabine. Alternativ sind Verfahren zur Nassauswaschung üblich, bei denen der Lack-Overspray mittels eines Vorhanges gebildet von zumindest teilweise im freien Fall herabfließendem Trägermedium aus der Umluft der Lackierkabine aufgenommen, mit dem Trägermedium entfernt und als Fracht in ein Beruhigungsbecken enthaltend das Trägermedium überführt wird.

Eine Nassauswaschung von Lack-Overspray an mit einem flüssigen Trägermedium umströmten Abscheideflächen, bei der auf eine intensive Verwirbelung des Trägermediums mit der Umluft zugunsten einer weniger energieintensiven Verfahrensweise verzichtet wird, ist in der WO 2008/067880 A2 grundsätzlich beschrieben. Auf dieses spezielle Verfahren abgestimmt wird dort die Verwendung eines flüssigen Trägermediums mit niedrigem Dampfdruck, beispielsweise eines Pflanzenöls oder einer Mischung von Glykolethern, vorgeschlagen, in dem sich die festen Bestandteile des Lack-Oversprays jedoch weder lösen noch mit selbigem chemische Verbindungen eingehen können, so dass eine einfache physikalische Trennung des Lack-Oversprays vom Trägermedium möglich ist. Weiterhin wird als vorteilhaft dargelegt, wenn das Trägermedium selbst nicht zur oxidativen Degradation neigt, so dass die mittlere Verweilzeit des Trägermediums im Kreislaufsystem möglichst hoch gehalten werden kann.

In solchen letztgenannten Verfahren hat sich in jüngerer Zeit eine Variante etabliert, bei der die Auswaschung auf mit dem Trägermedium überströmten Abscheideflächen erfolgt, wobei der Lack-Overspray in der Umluft durch elektrische Hochspannung ionisiert und im elektrischen Feld auf die Abscheideflächen hinzubewegt wird. Hierfür sind die Abscheideflächen selbst aus einem elektrisch leitenden Werkstoff gefertigt und mit dem die Ionisation verursachenden Gegenpol elektrisch verbunden. Die Unterstützung der Nassauswaschung des Lack-Oversprays durch die Anlegung einer elektrischen Hochspannung wird in der WO 2010/025844 A1 aufgenommen und eine geeignete Adaption der Abscheidevorrichtung an das spezielle Verfahren vorgestellt, die die Integration der Elektroden jeweils in die Abscheideeinheiten umfassend die mit einem flüssigen Trägermedium umspülten Abscheideflächen ermöglicht. Eine effiziente Vorrichtung ordnet die Elektrodeneinheiten dabei mit möglichst geringem Abstand zur mit dem Trägermedium umströmten Abscheidefläche an, um zu gewährleisten, dass nahezu jedes ionisierte Lack-Overspray-Partikel während seines Transports mit der Umluft entlang der Abscheideflächen entlang des elektrischen Feldes in das Trägermedium überführt wird. Hier ergibt sich demnach als verfahrenstechnische Anforderung, dass das Umströmen der Abscheideflächen mit dem Trägermedium möglichst homogen und in reproduzierbarer Nassfilmdicke zu erfolgen hat, um das Auftreten von elektrischen Überschlägen zwischen Elektrodeneinheit und Abscheidefläche ausschließen zu können.

In diesem Zusammenhang schlägt die WO 2011/110302 A1 vor, dass als flüssiges Trägermedium für eine mit Ionisation arbeitende Nassauswaschung von Lack-Overspray eine Mischung eines oder mehrerer Polyole mit Wasser enthaltend ein nichtionisches Tensid einzusetzen ist, wobei die Mischung eine Viskosität gemessen nach DIN 53211 mit 4mm Auslaufdüse bei 23 °C von 11-25 Sekunden aufweisen soll. Bevorzugte Polyole sind Glycerin und Polyalkylenglykole, wobei dem Wasser basierten Trägermedium zur Einstellung der gewünschten Viskosität zusätzlich Verdicker zugesetzt werden können.

Auch die WO 2010/025810 A1 offenbart ein derartiges Verfahren zum Entfernen von Lack-Overspray, bei welchem der Overspray von einem Luftstrom aufgenommen und zu einer von einer Abscheideflüssigkeit überströmten Abscheidefläche transportiert wird, wo ein Großteil zumindest der Feststoffe in die Abscheideflüssigkeit übergeht, von dieser abtransportiert und durch Abscheiden aus der Flüssigkeit entfernt wird. Die Wasser basierte Abscheideflüssigkeit kann bis zu 60 Gew.-% eines polaren, wasserlöslichen Lösemittels umfassend Ethylenglykol, Propylenglykol, Polyethylenglykol und/oder Polypropylenglykol enthalten.

Zusätzlich gilt es bei der Auswahl des Trägermediums in Verfahren mit elektrostatisch unterstützter Nassauswaschung des Lack-Oversprays zu berücksichtigen, dass die Fließeigenschaften beim Umströmen der Abscheideflächen stabil gehalten werden können. Problematisch sind jedenfalls Verdampfungsverluste und die chemische Degradation von rheologischen Additiven durch Ozon, das bei der Ionisation des Lack-Oversprays zwangsläufig in der Umluft angereichert wird.

Weiterhin ist es vorteilhaft, wenn das Trägermedium ein solches Fließeigenschaftsprofil aufweist, dass es an Orten im Kreislaufsystem der Nassauswaschung mit sehr geringer Schergeschwindigkeit eine erhöhte Viskosität besitzt, um auf diese Weise einer schnellen Sedimentation des Lack-Oversprays, beispielsweise in Anlagenbereichen mit geringem Austausch an Trägermedium oder allgemein bei Anlagenstillstand, entgegenzuwirken.

Aufgabe der vorliegenden Erfindung ist es nunmehr, ein flüssiges Trägermedium für eine Nassauswaschung von Lack-Overspray an mit dem Trägermedium umströmten Abscheideflächen bereitzustellen, dass bei im Wesentlichen durch die Schwerkraft bedingten Strömungsverhalten einen hohen Volumenstrom erlaubt und insbesondere zur Verhinderung von elektrischen Überschlägen bei elektrostatischer Abscheidung ionisierter Lack-Overspray-Partikel eine reproduzierbare homogene Nassfilmdicke des abfließenden Trägermediums auf der Abscheidefläche sicherstellt. Zusätzlich ist für eine elektrostatisch unterstützte Nassauswaschung des Lack-Oversprays notwendig, dass das Fließeigenschaftsprofil weitgehend von den spezifischen äußeren Einflüssen unabhängig stabil gehalten werden kann, so dass die mittlere Verweilzeit des Trägermediums für einen wirtschaftlichen Betrieb der Nassauswaschung möglichst hoch ist. Weiterhin ist es wünschenswert, wenn in Bereichen des Systemkreislaufs für das Trägermedium mit geringem Volumenaustausch oder bei Anlagenstillstand durch geschickte Auswahl des Trägermediums einer Sedimentation entgegengewirkt werden kann.

Dieses Aufgabenprofil wird in einem ersten Aspekt der vorliegenden Erfindung gelöst durch Verwendung eines Wasser-basierten Mittels enthaltend insgesamt mehr als 50 Gew.-% an polyfunktionellen organischen Oxo-Verbindungen als Trägermedium zur Nassauswaschung von Lack-Overspray aus Lackierkabinen, wobei die polyfunktionellen organischen Oxo-Verbindungen zumindest zu 80 Gew.-% bezogen auf die Gesamtmenge der polyfunktionellen organischen Oxo-Verbindungen ausgewählt sind aus niedermolekularen polyfunktionellen organischen Oxo-Verbindungen, wobei derartige niedermolekulare Verbindungen nicht mehr als 12 Kohlenstoffatome aufweisen, dadurch gekennzeichnet, dass das Wasser-basierte Mittel bei Schergeschwindigkeiten im Bereich von 10 - 1000 $s^{-1}$ eine Viskosität aufweist, die stets oberhalb von 10 mPas liegt und das Verhältnis von Ruheviskosität $\eta_{10}$ zu Prozessviskosität $\eta_{100}$ nicht größer als 10 : 1 ist.

Alle Angaben in Gewichtsprozent (Gew.-%) beziehen sich, wenn nicht ausdrücklich eine andere Bezugsgröße genannt ist, auf die Gesamtzusammensetzung des Wasser-basierten Mittels. Ein Wasser-basiertes Mittel zur erfindungsgemäßen Verwendung enthält zumindest 5 Gew.-% an Wasser.

Als Trägermedium wird vorliegend das flüssige im Kreislauf der Nassauswaschung geführte Medium bezeichnet, wobei das Trägermedium definitionsgemäß den Lack-Overspray enthält, aber nicht aus diesem zusammengesetzt ist, jedoch können Additive Bestandteile des Trägermediums sein, beispielsweise Verdicker als rheologisches Additiv.

Die Viskosität ist im Rahmen der vorliegenden Erfindung definiert als der Quotient der Schubspannung zur Schergeschwindigkeit und wird als sogenannte apparente Viskosität experimentell mittels Kegel-Platte-Rotationsviskosimeter bei einer Temperatur von 20 °C bestimmt. Als Prozessviskosität $\eta_{100}$ ist die derart bestimmte Viskosität bei einer Schergeschwindigkeit von 100 $s^{-1}$ bezeichnet, die in etwa der Scherbeanspruchung beim Ablaufen des Trägermediums von den Abscheideflächen einer Anlage zum Abtrennen von Lack-Overspray mittels Nassauswaschung entspricht. Analog ist die Ruheviskosität $\eta_{10}$ die derart bestimmte Viskosität bei einer Schergeschwindigkeit von 10 $s^{-1}$.

Als Lack-Overspray einer Lackierkabine werden erfindungsgemäße die nicht auf der zu lackierenden Oberfläche immobilisierten Lackbestandteile verstanden, die mit der Kabinenluft aus der Lackierkabine heraustransportiert werden. Der Lack-Overspray besteht demnach aus gasförmigen und flüssigen Lackbestandteilen, bspw. Lösemittel und Verlaufsmittel, sowie den pigmentierten oder unpigmentierten partikulären Bindemittelbestandteilen.

Es hat sich herausgestellt, dass der erfindungsgemäß hohe Anteil an polyfunktionellen organischen Oxo-Verbindungen, es erlaubt Viskositäten über einen weiten Bereich von Schergeschwindigkeiten konstant oberhalb von 10 mPas einzustellen, ohne dass rheologische Additive notwendigerweise hinzuformuliert werden müssen. In Anlagen mit elektrostatisch unterstützter Abscheidung des Lack-Oversprays erbringt dies den Vorteil, dass eine chemische Degradation von rheologischen Additiven durch das in derartigen Anlagen entstehende Ozon das Fließverhalten nicht drastisch verändert. Das Fließeigenschaftsprofil bedingt, dass das Trägermedium im Wesentlichen der Schwerkraft folgend nahezu laminar von den Abscheideflächen abfließt, so dass eine homogene Nassfilmdicke über die gesamte vom Trägermedium umströmte Abscheidefläche realisiert ist. Bereiche turbulenter Strömung, die im Ablaufverhalten zu einer Läuferbildung und so zu unkontrollierbaren Schwankungen in der Nassfilmdicke führen, treten erfindungsgemäß nicht auf, so dass apparativ die Realisierung eines möglichst engen Spaltes zwischen den Abscheideflächen umfassend eine Elektrodeneinheit ermöglicht wird. Gleichzeitig kann der Volumenstrom - also das pro Zeiteinheit von den Abscheideflächen abfließende Volumen an Trägermedium - erhöht und so ein besserer Abtransport des Lackobersprays erzielt und der Verklebung der Abscheideflächen wegen erhöhter Fracht an Lack-Overspray entgegengewirkt bzw. ein vergleichsweise höherer Anteil an Lack-Overspray in der Kabinenluft toleriert werden. Das Einstellen des erfindungsgemäßen Fließeigenschaftsprofils gelingt dem Fachmann durch Variation der Menge an polyfunktionellen organischen Oxo-Verbindungen und ggf. durch Zugabe einer geringen Menge eines ihm bekannten rheologischen Additivs. Ein weiterer Vorteil des Trägermediums gemäß der erfindungsgemäßen Verwendung besteht darin, dass das Wasser enthaltende Mittel aufgrund seiner hygroskopischen Eigenschaften und des niedrigen Wasserdampfpartialdruckes gut in der Lage ist, eine solche Menge an Wasser aus der Raumluft aufzunehmen, die ausreicht um Verdampfungsverluste durch temporäre Änderung der Umgebungstemperatur bzw. der Luftfeuchte auszubalancieren. Auf diese Weise ist zum einen das Ablaufverhalten auf den Abscheideflächen der Nassauswaschung weitestgehend unabhängig von den physikalischen Eigenschaften der Kabinenluft (Temperatur ,Luftfeuchte) und zum anderen im Vergleich zu im Wesentlichen aus Wasser zusammengesetzten Trägermedien eine höhere mittlere Verweilzeit des Wasser basierten Mittels gemäß vorliegender Erfindung gegeben.

Weiterhin ist es vorteilhaft, zu berücksichtigen, dass das Trägermedium, beispielsweise durch Zugabe eines Verdickers, unter Prozessbedingungen keine zu hohe innere Reibung aufweist. Eine zu hohe Viskosität kann dazu führen, dass das Ablaufen des Trägermediums von den Abscheideflächen unter dem Einfluss der Schwerkraft derart verlangsamt wird, dass sich bei Aufrechterhaltung eines im Prozess vorgegebenen Volumenstromes eine kritische Nassfilmauflage auf den Abscheideflächen aufbaut, bei der der Nassfilm des Trägermediums unter der Wirkung der Schwerkraft von der Abscheidefläche zeitlich wiederkehrend absackt und analog zur Läuferbildung kein Abfließen in homogener Nassfilmdicke über die gesamte Abscheidefläche erzielt werden kann. Demnach ist in einer erfindungsgemäßen Verwendung bevorzugt, wenn die Prozessviskosität $\eta_{100}$ nicht größer als 500 mPas, besonders bevorzugt nicht größer als 300 mPas, insbesondere bevorzugt nicht größer als 200 mPas und ganz besonders bevorzugt nicht größer als 150 mPas ist.

Für ein homogenes Abfließen des Trägermediums an den Abscheideflächen der Nassauswaschung ist es ferner bevorzugt, wenn das Medium für die erfindungsgemäße Verwendung die Eigenschaft besitzt, bei den unterschiedlich ausgeprägten Scherbeanspruchungen während des Abfließens, kein ausgeprägt divergierendes Fließverhalten aufzuweisen. In einer besonderen Ausführungsform der erfindungsgemäßen Verwendung ist das Verhältnis von Ruheviskosität $\eta_{10}$ zu Prozessviskosität $\eta_{100}$ daher nicht größer als 5 : 1, vorzugsweise nicht größer als 3 : 1.

Es hat sich ferner herausgestellt, dass das Wasser basierte Mittel in seiner Funktion als Trägermedium in der Nassauswaschung von Lack-Overspray bestens geeignet ist, wenn für die Viskosität derselben mindestens eines der folgenden Merkmale miterfüllt ist:

a) für Schergeschwindigkeiten $\dot{y}$ im Bereich von 10 - 100s$^{-1}$ gilt $\left| \dfrac{d}{d \log_{10} \dot{y}} \eta \right|$ stets kleiner als 100 mPas; und/oder

b) für Schergeschwindigkeiten $\dot{y}$ im Bereich von 100 - 1000s$^{-1}$ gilt $\left| \dfrac{d}{d \log_{10} \dot{y}} \eta \right|$ stets kleiner als 50 mPas ist.

Jedes der vorstehend genannten Merkmale trägt zusätzlich dazu bei, dass ein homogenes Abfließverhalten des Trägermediums von den Abscheideflächen der Nassauswaschung resultiert und damit insgesamt gewährleistet ist, dass das Betreiben einer elektrostatisch unterstützten Abscheidung des Lack-Oversprays dauerhaft störungsfrei, d.h. ohne elektrische Überschläge und Kurzschlüsse erfolgt. Die Erfüllung zumindest eines der vorstehend genannten Merkmale des Trägermediums ist daher für die erfindungsgemäße Verwendung bevorzugt.

Unter einer polyfunktionellen organischen Oxo-Verbindung wird vorliegend eine organische Verbindung verstanden, die zumindest drei funktionelle Gruppen ausgewählt aus Hydroxyl- , Ester- und/oder Ether-Gruppen aufweist, wobei stets zumindest eine Hydroxyl-Gruppe enthalten ist, wobei maximal auf jede fünfte solche funktionelle Gruppe ein anderes Heteroatom als Sauerstoff kommt und vorzugsweise keine anderen Heteroatome als Sauerstoffatome enthalten sind.

Bei erfindungsgemäßer Verwendung ist die polyfunktionelle organischen Oxo-Verbindungen zumindest zu 80 Gew.-% bezogen auf die Gesamtmenge der polyfunktionellen organischen Oxo-Verbindungen ausgewählt aus sogenannten niedermolekularen polyfunktionellen organischen Oxo-Verbindungen, wobei derartige niedermolekulare Verbindungen nicht mehr als 12 Kohlenstoffatome, vorzugsweise nicht mehr als 8 Kohlenstoffatome, besonders bevorzugt nicht mehr als 6 Kohlenstoffatome aufweisen. Über die Anwesenheit dieser Verbindungen wird das erforderliche Viskositätsverhalten des Trägermediums über einen weiten Bereich der Schergeschwindigkeit und die hygroskopischen Eigenschaften zur Stabilisierung eines verhältnismäßig niedrigen Wasserdampfpartialdruckes in der Kabinenluft eingestellt.

In diesem Zusammenhang ist weiterhin bevorzugt, wenn die niedermolekularen polyfunktionellen organischen Oxo-Verbindungen ausgewählt sind aus Verbindungen mit zumindest drei funktionellen Gruppen wiederum ausgewählt aus Hydroxyl- und/oder Ether-Gruppen, vorzugsweise aus Verbindungen mit zumindest zwei Hydroxyl-gruppen, besonders bevorzugt aus Verbindungen mit zumindest drei Hydroxyl-Gruppen. Bevorzugte Vertreter der niedermolekularen polyfunktionellen organischen Oxo-Verbindungen sind 1,2,3-Propantriol, 1,1,1-Tris(hydroxymethyl)ethan, Threit, Erythrit, Pentaerythrit, Pentite wie Xylit, Adonit und Arabit, Hexite wie Sorbitol und Mannitol, Aldotetrosen wie Erythrose, Aldopentosen wie Ribose und Xylose, Aldohexosen wie Glucose und Mannose sowie dessen einfache Ether mit jeweils nicht mehr als vier Kohlenstoffatomen bzw. insgesamt vier Ethylenoxid- und/oder Propylenoxid-Einheiten in der Ether-Gruppe, besonders bevorzugt 1,2,3-Propantriol.

Es hat sich gezeigt, dass der Anteil an niedermolekularen polyfunktionellen organischen Oxo-Verbindungen von zumindest 80 Gew.-%, vorzugsweise von zumindest 90 Gew.-% und besonders bevorzugt von zumindest 95 Gew.-% jeweils bezogen auf die Gesamtmenge der polyfunktionellen organischen Oxo-Verbindungen erfahrungsgemäß bedingt, dass dem Trägermedium das in der erfindungsgemäßen Verwendung spezifische Viskositätsverhalten verliehen wird.

Der Zusatz rheologischer Additive mit verdickenden Eigenschaften ("Verdicker") ist bei der erfindungsgemäßen Verwendung der polyfunktionellen organischen Oxo-Verbindungen wie bereits erwähnt häufig nicht notwendig und Bedarf bei Verwendung von Anlagen mit elektrostatisch unterstützter Abscheidung häufig eine kontrollierte Nachdosierung solcher Verdicker, die auf polymeren organischen Verbindungen basieren. Auf der anderen Seite kann ein Zusatz von organischen Verbindungen mit verdickenden Eigenschaften vorteilhaft sein, beispielsweise damit dem Trägermedium bei sehr niedrigen Schergeschwindigkeiten eine im Vergleich zur prozessüblichen Schergeschwindigkeit beim Abfließen des Trägermediums von der Abscheidefläche eine erhöhte Viskosität verliehen wird. Dies ist insbesondere in Bereichen der Anlage mit niedrigen Schergeschwindigkeiten von technischer Bedeutung, um einer schnellen Sedimentation von ausgewaschenem Lack-Overspray in Bereichen des Systemkreislaufs, in denen der Overspray schlecht zugänglich ist, entgegenzuwirken. Verfahrensbedingt wird das Trägermedium auch zunächst solange im Kreislauf geführt bis eine kritische Menge an Lack-Overspray aufgenommen ist und erst dann wird kontinuierlich in einem Teilvolumenstrom, Lack-Overspray durch Sedimentation oder Flotation aus dem Trägermedium entfernt und das an Overspray abgereicherte Trägermedium in den Kreislauf der Nassauswaschung zurückgeführt. Eine Sedimentation des Lack-Oversprays bereits im Kreislaufsystem ist daher grundsätzlich zu vermeiden.

In diesem Zusammenhang ist erfindungsgemäß die Verwendung eines Trägermediums bevorzugt, dass als polyfunktionelle organische Oxo-Verbindungen zusätzlich Polyetherpolyole und/oder Polyesterpolyole enthält, die jeweils keine niedermolekulare Verbindung darstellen, aber dennoch vorzugsweise eine gewichtsmittlere Molmasse von weniger als 10.000 g/mol, besonders bevorzugt von weniger als 5.000 g/mol, insbesondere bevorzugt von weniger als 2.000 g/mol aufweisen. Auf diese Weise wird die Viskosität des Trägermediums insbesondere im Bereich niedriger Scherbeanspruchungen im Bereich von 1 bis 100 s$^{-1}$ erhöht und der Sedimenation von Overspray im Kreislaufsystem der Nassauswaschung wie zuvor beschrieben entgegengewirkt, ohne dass die Viskosität des Trägermediums im relevanten Bereich der Scherbeanspruchung nicht bereits nach kurzer Verweilzeit im Systemkreislauf aufgrund chemischer Degradation durch Ozon drastisch reduziert wird. Die Bestimmung der gewichtsmittleren Molmasse der Polyetherpolyole und/oder Polyesterpolyole erfolgt aus Molmassenverteilungskurven aufgenommen mittels Gelpermeationschromatographie kalibriert gegenüber Pullulan-Standards.

Unter einem Polyetherpolyol wird vorliegend eine organische Verbindung verstanden, die zumindest eine Hydroxyl-Gruppe und entlang ihrer Hauptkette zumindest zwei Ether-Gruppen aufweist, die über nicht mehr als 6 Kohlenstoffatome miteinander verbunden sind.

Unter einem Polyesterpolyol wird vorliegend eine organische Verbindung verstanden, die zumindest eine Hydroxyl-Gruppe und entlang ihrer längsten Hauptkette zumindest zwei Ester-Gruppen aufweist, die über nicht mehr als 6 Kohlenstoffatome miteinander verbunden sind.

Weiterhin kann das Trägermedium für eine der jeweiligen Anlage zur Nassauswaschung angepasste Nassfilmauflage auf den Abscheideflächen oder zur Erhöhung des Volumenstromes bei gleichzeitiger Aufrechterhaltung eines laminaren Flusses auf den selbigen zusätzlich einen Verdicker enthalten, der die Eigenschaft besitzt die Viskosität insbesondere bei Schergeschwindigkeiten im Bereich von 1 bis 100 s$^{-1}$ zu erhöhen und vorzugsweise ausgewählt ist aus wasserlöslichen oder wasserdispergierbaren polymeren organischen Verbindungen mit einem gewichtsmittleren Molmasse von zumindest 10.000 g/mol und/oder Schichtsilikaten in Partikelform, besonders bevorzugt aus Polymeren und/oder Copolymeren der (Meth)Acrylsäure sowie deren Alkylester und/oder aus Polyurethanen. Die vorliegende Erfindung zeichnet sich jedoch dadurch aus, dass auf die Anwesenheit solcher Verdicker weitestgehend verzichtet werden kann. In einer bevorzugten Ausführungsform werden daher solche Trägermedien erfindungsgemäß verwendet, die insgesamt nicht mehr als 5 Gew.-%, besonders bevorzugt nicht mehr als 2 Gew.-%, insbesondere bevorzugt nicht mehr als 1 Gew.-% eines oder mehrerer Verdicker ausgewählt aus wasserlöslichen oder wasserdispergierbaren polymeren organischen Verbindungen mit einer gewichtsmittleren Molmasse von zumindest 10.000 g/mol und/oder Schichtsilikaten in Partikelform enthalten.

Zur Vergleichmäßigung des Ablaufverhaltens von den Abscheideflächen der Nassauswaschung kann das Trägermedium zusätzlich zumindest eine oberflächenaktive Substanz enthalten, die vorzugsweise ausgewählt ist aus nichtionischen Tensiden.

In einem weiteren Aspekt betrifft die vorliegende Erfindung zur Lösung des eingangs genannten Aufgabenspektrums ein Verfahren zum Abscheiden von Lack-Overspray aus der Umgebungsluft einer Lackierkabine, dadurch gekennzeichnet, dass

    i) der Lack-Overspray mit der Umgebungsluft auf eine von einem Trägermedium benetzte Abscheidefläche geführt wird, und

    ii) ein Teil des Trägermediums, das Lack-Overspray aus der Umgebungsluft aufgenommen hat, von der Abscheidefläche entfernt und zugleich durch einen anderen Teil eines gleichen Trägermediums ersetzt wird, das sich von dem entfernten Teil lediglich dadurch unterscheidet, dass in gleichem Volumen weniger Lack-Overspray enthalten ist,

wobei das Trägermedium neben Wasser mehr als 50 Gew.-% an polyfunktionellen organischen Oxo-Verbindungen enthält, wobei die polyfunktionellen organischen Oxo-Verbindungen zumindest zu 80 Gew.-% bezogen auf die Gesamtmenge der polyfunktionellen organischen Oxo-Verbindungen ausgewählt sind aus niedermolekularen polyfunktionellen organischen Oxo-Verbindungen, wobei derartige niedermolekulare Verbindungen nicht mehr als 12 Kohlenstoffatome aufweisen, und wobei das Trägermedium bei Schergeschwindigkeiten im Bereich von 10 - 1000s$^{-1}$ eine Viskosität aufweist, die stets oberhalb von 10 mPas liegt und wobei das Verhältnis von Ruheviskosität $\eta_{10}$ zu Prozessviskosität $\eta_{100}$ nicht größer als 10 : 1 ist.

In bevorzugten Ausführungsformen des erfindungsgemäßen Verfahrens finden dieselben Trägermedien Anwendung wie zuvor im Kontext des ersten Aspektes der vorliegenden Erfindung detailliert beschrieben. Jedoch ist zusätzlich ein Verfahren bevorzugt, bei dem der Anteil der polyfunktionellen organischen Oxo-Verbindungen in Gewichtsprozent (Gew.-%) am Trägermedium nicht größer als das 400-fache, besonders bevorzugt nicht größer als das 350-fache, des Dichteunterschieds in g/cm$^3$ zwischen dem Koagulat des Lack-Oversprays und Wasser jeweils bei 20°C ist. Das Koagulat weist dabei stets eine Dichte auf, die oberhalb der Dichte von Wasser liegt. Zur Bestimmung der Dichte des Koagulates des Lack-Oversprays wird erfindungsgemäß der Feststoffanteil des Trägermediums mittels Dekantierzentrifuge auf 60-65 Gew.-% aufkonzentriert und die Dichte des so erhaltenen Lackschlammes pyknometrisch unter Zugrundelegung des Feststoffgehaltes nach Auslagerung im Trockenofen bei 120 °C für 24 h ermittelt.

Durch diese von der Dichte des Lackkoagulats abhängige bevorzugte Obergrenze für den Anteil der polyfunktionellen organischen Oxo-Verbindungen wird gewährleistet, dass der Lack-Overspray im Trägermedium nicht zur Flotation neigt. Anderenfalls wird das laminare Abfließen des Trägermediums von den Abscheideflächen gestört und damit auch die Gefahr elektrischer Überschläge zwischen benachbarten Abscheideflächen erhöht. In diesem Zusammenhang gilt jedoch selbstverständlich auch, dass erfindungsgemäß im Trägermedium stets mehr als 50 Gew.-% an polyfunktionellen organischen Oxo-Verbindungen enthalten sein müssen, da anderenfalls die geforderten Fließeigenschaften des Trägermediums nicht gewährleistet werden können.

In einer besonderen Ausgestaltung des erfindungsgemäßen Verfahrens wird die Abscheidefläche kontinuierlich von Trägermedium umspült wird, wobei das Trägermedium der Schwerkraft folgend von selbiger abfließt und das Umspülen der Abscheidefläche vorzugsweise laminar erfolgt.

Eine laminare Strömung des Trägermediums auf den Abscheideflächen ist erfindungsgemäß allgemein dadurch charakterisiert, dass das Trägermedium außerhalb einer laminaren Grenzschicht der Schwerkraft folgend nahezu parallel zur Abscheidefläche entlangfließt und die Strömung dabei weder abreißt noch verwirbelt, so dass bei gleichbleibenden Volumenstrom des umspülenden Trägermediums eine weitestgehend stationäre Strömung entlang der Abscheideflächen resultiert.

Vorzugsweise ist auf den Abscheideflächen im erfindungsgemäßen Verfahren eine Nassfilmauflage von zumindest 0,5 L/m$^2$, jedoch vorzugsweise von weniger als 2 L/m$^2$, jeweils bezogen auf das Volumen des Trägermediums realisiert.

Wie bereits einleitend erwähnt, ist das erfindungsgemäße Verfahren insbesondere für eine elektrostatisch unterstützte Abscheidung von Lack-Overspray-Partikeln bestens geeignet. Dies ist dadurch gegeben, dass das homogene und damit gut einstellbare Abfließverhalten des Trägermediums auch bei höheren Nassfilmauflagen von zumindest 0,5 L/m² es erlaubt, Abscheideflächen mit sehr geringer Beabstandung parallel zueinander anzuordnen, ohne dass eine Gefahr elektrischer Überschläge hervorgerufen durch unstetes inhomogenes Abfließen des Trägermediums besteht, die den kontinuierlichen und wirtschaftlichen Betrieb des Verfahrens gefährden könnten. Insofern ist es im erfindungsgemäßen Verfahren für eine möglichst effiziente Abtrennung des Lack-Oversprays bevorzugt, dass selbiger in der Umgebungsluft unter Einwirkung einer elektrischen Spannung elektrostatisch aufgeladen und im elektrischen Feld zur Abscheidefläche transportiert wird. Hierfür ist weiterhin bevorzugt, dass die Abscheidefläche aus einem flächigen metallischen Werkstoff gefertigt ist und die elektrische Spannung vorzugsweise zwischen Abscheidefläche und einer metallischen Elektrode angelegt ist, die in direktem Kontakt mit der Umgebungsluft steht.

Ausführungsbeispiele:

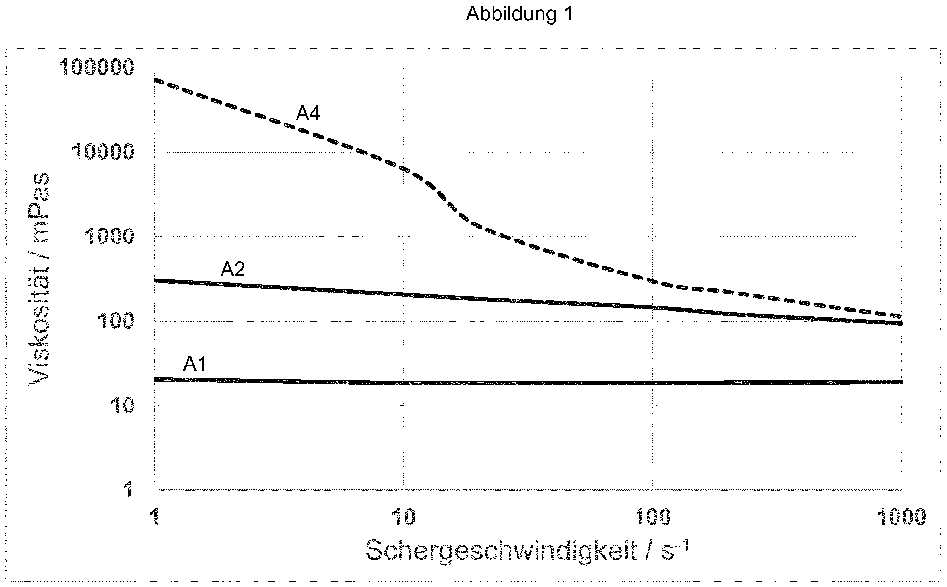

Im Folgenden sind beispielhafte Rezepturen aufgeführt, die als Wasser-basierte Trägermedien einer Nassauswaschung von Lack-Overspray dienen können. Die erfindungsgemäßen Rezepturen A1-A3 weisen dabei das geforderte Eigenschaftsprofil hinsichtlich ihrer Viskosität auf und ermöglichen somit bei elektrostatisch unterstützter Abscheidung eine ökonomische Fahrweise in der Nassauswaschung bei gleichzeitig hohem Volumenstrom des die Abscheideflächen umspülenden Trägermediums (siehe Abbildung 1).

Tabelle 1

| | Gewichtsanteile in % | | | |
|---|---|---|---|---|
| | A1 | A2 | A3 | A4 |
| Glycerin | 67,5 | 67,5 | 67,5 | 35 |
| Verdicker | - | 0,7 [1] | 0,7 [1] | 1,0 [2] |
| Tensid | - | - | 1,0 [3] | - |
| Wasser | 32,5 | 31,8 | 30,8 | 64 |

1    auf Basis von Polyacrylat
2    auf Basis von Polyurethan
3    auf Basis eines 4fach ethoxylierten C12-C14 Fettalkohols

## Patentansprüche

1.   Verwendung eines Wasser-basierten Mittels enthaltend insgesamt mehr als 50 Gew.-% an polyfunktionellen organischen Oxo-Verbindungen, die organische Verbindungen darstellen, die zumindest drei funktionelle Gruppen ausgewählt aus Hydroxyl-, Ester- und/oder Ether-Gruppen aufweisen, wobei stets zumindest eine Hydroxyl-Gruppe enthalten ist und maximal auf jede fünfte solche funktionelle Gruppe ein anderes Heteroatom als Sauerstoff kommt, als Trägermedium zur Abscheidung von Lack-Overspray aus Lackierkabinen, **dadurch gekennzeichnet, dass** das Wasser-basierte Mittel bei Schergeschwindigkeiten im Bereich von 10 - 1000 s$^{-1}$ eine Viskosität aufweist, die stets oberhalb von 10 mPas liegt und das Verhältnis von Ruheviskosität $\eta_{10}$ zu Prozessviskosität $\eta_{100}$ nicht größer als 10 : 1 ist,
wobei die polyfunktionellen organischen Oxo-Verbindungen zumindest zu 80 Gew.-% bezogen auf die Gesamtmenge der polyfunktionellen organischen Oxo-Verbindungen ausgewählt sind aus niedermolekularen polyfunktionellen organischen Oxo-Verbindungen, wobei derartige niedermolekulare Verbindungen nicht mehr als 12 Kohlenstoffatome aufweisen.

2.   Verwendung nach Anspruch 1, **dadurch gekennzeichnet, dass** die niedermolekularen polyfunktionellen organischen Oxo-Verbindungen nicht mehr als 8 Kohlenstoffatome, vorzugsweise nicht mehr als 6 Kohlenstoffatome aufweisen.

3.   Verwendung nach Anspruch 2, **dadurch gekennzeichnet, dass** die niedermolekularen polyfunktionellen organischen Oxo-Verbindungen vorzugsweise ausgewählt sind aus Verbindungen mit zumindest drei funktionellen Gruppen wiederum ausgewählt aus Hydroxyl- und/oder Ether-Gruppen, vorzugsweise aus Verbindungen mit zumindest zwei Hydroxyl-gruppen, besonders bevorzugt aus Verbindungen mit zumindest drei Hydroxyl-Gruppen.

4.   Verwendung nach einem oder mehreren der Ansprüche 1 bis 3, **dadurch gekennzeichnet, dass** als polyfunktionelle organische Oxo-Verbindungen zusätzlich Polyetherpolyole und/oder Polyesterpolyole enthalten sind, die jeweils keine niedermolekulare Verbindung nach einem oder mehreren der Ansprüche 2 bis 4 darstellen, und eine gewichtsmittlere Molmasse von vorzugsweise weniger als 10.000 g/mol, besonders bevorzugt von weniger als 5.000 g/mol, insbesondere bevorzugt von weniger als 2.000 g/mol aufweisen.

5.   Verwendung nach einem oder mehreren der vorherigen Ansprüche, **dadurch gekennzeichnet, dass** der Anteil an polyfunktionellen Oxo-Verbindungen mehr als 60 Gew.-%, jedoch vorzugsweise nicht mehr als 80 Gew.-% beträgt.

6.   Verfahren zum Abscheiden von Lack-Overspray aus der Umgebungsluft, **dadurch gekennzeichnet, dass**

   i) der Lack-Overspray mit der Umgebungsluft auf eine von einem Trägermedium benetzte Abscheidefläche geführt wird, und

ii) ein Teil des Trägermediums, das Lack-Overspray aus der Umgebungsluft aufgenommen hat, von der Abscheidefläche entfernt und zugleich durch einen anderen Teil eines gleichen Trägermediums ersetzt wird, das sich von dem entfernten Teil lediglich dadurch unterscheidet, dass in gleichem Volumen weniger Lack-Overspray enthalten ist,

**dadurch gekennzeichnet, dass** das Trägermedium neben Wasser mehr als 50 Gew.-% an polyfunktionellen organischen Oxo-Verbindungen enthält, die organische Verbindungen darstellen, die zumindest drei funktionelle Gruppen ausgewählt aus Hydroxyl- , Ester- und/oder Ether-Gruppen aufweisen, wobei stets zumindest eine Hydroxyl-Gruppe enthalten ist und maximal auf jede fünfte solche funktionelle Gruppe ein anderes Heteroatom als Sauerstoff kommt, wobei die polyfunktionellen organischen Oxo-Verbindungen zumindest zu 80 Gew.-% bezogen auf die Gesamtmenge der polyfunktionellen organischen Oxo-Verbindungen ausgewählt sind aus niedermolekularen polyfunktionellen organischen Oxo-Verbindungen, wobei derartige niedermolekulare Verbindungen nicht mehr als 12 Kohlenstoffatome aufweisen, und das Trägermedium bei Schergeschwindigkeiten im Bereich von 10 - 1000s$^{-1}$ eine Viskosität aufweist, die stets oberhalb von 10 mPas liegt und wobei das Verhältnis von Ruheviskosität $\eta_{10}$ zu Prozessviskosität $\eta_{100}$ nicht größer als 10 : 1 ist.

7. Verfahren nach Anspruch 6, **dadurch gekennzeichnet, dass** die Abscheidefläche kontinuierlich von Trägermedium umspült wird und Trägermedium der Schwerkraft folgend von selbiger abfließt, wobei das Umspülen der Abscheidefläche vorzugsweise laminar erfolgt.

8. Verfahren nach einem oder beiden der Ansprüche 6 und 7, **dadurch gekennzeichnet, dass** auf der Abscheidefläche eine Nassfilmauflage von zumindest 0,5 l/m$^2$, jedoch vorzugsweise von weniger als 2 l/m$^2$, jeweils bezogen auf das Trägermediumvolumen realisiert ist.

9. Verfahren nach einem oder mehreren der Ansprüche 6 bis 8, **dadurch gekennzeichnet, dass** der Lack-Overspray in der Umgebungsluft unter Einwirkung einer elektrischen Spannung elektrostatisch aufgeladen und im elektrischen Feld zur Abscheidefläche transportiert wird.

10. Verfahren nach einem oder mehreren der Ansprüche 6 bis 9, **dadurch gekennzeichnet, dass** das der Anteil an polyfunktionellen organischen Oxo-Verbindungen in Gewichtsprozent bezogen auf das Trägermedium nicht größer als das 400-fache, vorzugsweise nicht größer als das 350-fache, des Dichteunterschieds in g/cm$^3$ zwischen dem Koagulat des Lack-Oversprays und Wasser ist.

**Claims**

1. The use of a water-based agent containing in total more than 50 wt.% of polyfunctional organic oxo compounds which are organic compounds having at least three functional groups selected from hydroxyl, ester and/or ether groups, at least one hydroxyl group always being contained and there being a heteroatom other than oxygen on at most every fifth functional group of this kind, as a carrier medium for separating paint overspray from painting booths, **characterized in that**, at shear rates in the range of from 10 - 1000 s$^{-1}$, the water-based agent has a viscosity which is always above 10 mPas, and the ratio of static viscosity $\eta_{10}$ to process viscosity $\eta_{100}$ is no greater than 10:1, at least 80 wt.% of the polyfunctional organic oxo compounds, based on the total amount of the polyfunctional organic oxo compounds, being selected from low-molecular-weight polyfunctional organic oxo compounds, such low-molecular-weight compounds having no more than 12 carbon atoms.

2. The use according to claim 1, **characterized in that** the low-molecular-weight polyfunctional organic oxo compounds have no more than 8 carbon atoms, preferably no more than 6 carbon atoms.

3. The use according to claim 2, **characterized in that** the low-molecular-weight polyfunctional organic oxo compounds are preferably selected from compounds having at least three functional groups, which are in turn selected from hydroxyl and/or ether groups, preferably from compounds having at least two hydroxyl groups, particularly preferably from compounds having at least three hydroxyl groups.

4. The use according to one or more of claims 1 to 3, **characterized in that** polyether polyols and/or polyester polyols are additionally contained as polyfunctional organic oxo compounds, neither of which is a low-molecular-weight compound according to one or more of claims 2 to 4, and which have a weight-average molar mass of preferably less than 10,000 g/mol, particularly preferably of less than 5,000 g/mol, in particular of less than 2,000 g/mol.

5. The use according to one or more of the preceding claims, **characterized in that** the proportion of polyfunctional oxo compounds is more than 60 wt.%, but preferably no more than 80 wt.%.

**6.** A method for separating paint overspray from the ambient air, **characterized in that**

i) the paint overspray, together with the ambient air, is guided to a separation surface which is wetted by a carrier medium, and

ii) a part of the carrier medium which has absorbed paint overspray from the ambient air is removed from the separation surface and at the same time replaced by another part of the same carrier medium which differs from the removed part only **in that** less paint overspray is contained in the same volume,

**characterized in that** the carrier medium contains, in addition to water, more than 50 wt.% of polyfunctional organic oxo compounds which are organic compounds having at least three functional groups selected from hydroxyl, ester and/or ether groups, at least one hydroxyl group always being contained and there being a heteroatom other than oxygen on at most every fifth functional group of this kind, wherein at least 80 wt.% of the polyfunctional organic oxo compounds, based on the total amount of polyfunctional organic oxo compounds, are selected from low-molecular-weight polyfunctional organic oxo compounds, such low-molecular-weight compounds having no more than 12 carbon atoms, and the carrier medium, at shear rates in the range of from 10 to 1000 s$^{-1}$, having a viscosity which is always above 10 mPas, and the ratio of static viscosity $\eta_{10}$ to process viscosity $\eta_{100}$ being no greater than 10:1.

**7.** The method according to claim 6, **characterized in that** the carrier medium continuously flows round the separation surface and the carrier medium flows off said surface due to gravity, the carrier medium preferably flowing round the separation surface in a laminar manner.

**8.** The method according to one or both of claims 6 and 7, **characterized in that** a wet film coating of at least 0.5 l/m$^2$, but preferably less than 2 l/m$^2$, in each case based on the carrier medium volume, is produced on the separation surface.

**9.** The method according to one or more of claims 6 to 8, **characterized in that** the paint overspray in the ambient air is electrostatically charged under the influence of an electrical voltage and is transported in the electric field to the separation surface.

**10.** The method according to one or more of claims 6 to 9, **characterized in that** the proportion of polyfunctional organic oxo compounds in weight percent, based on the carrier medium, is no greater than 400 times, preferably no greater than 350 times, the density difference in g/cm$^3$ between the coagulum of the paint overspray and water.

**Revendications**

**1.** Utilisation d'un agent à base d'eau contenant au total plus de 50 % en poids de composés organiques oxo polyfonctionnels qui sont des composés organiques ayant au moins trois groupes fonctionnels choisis parmi les groupes hydroxyle, ester et/ou éther, au moins un groupe hydroxyle étant toujours présent et au plus un hétéroatome autre que l'oxygène est présent sur un cinquième de ces groupes fonctionnels, en tant que milieu de support pour la séparation de la peinture pulvérisée en excès dans des cabines de pulvérisation, **caractérisé en ce que** l'agent à base d'eau présente une viscosité qui est toujours supérieure à 10 mPas à des gradients de vitesse compris entre 10 et 1 000 s$^{-1}$ et le rapport de la viscosité au repos $\eta_{10}$ à la viscosité de traitement $\eta_{100}$ n'est pas supérieur à 10:1, les composés organiques oxo polyfonctionnels étant constitués à au moins 80 % en poids par rapport à la quantité totale des composés organiques polyfonctionnels oxo sont choisis parmi les composés organiques polyfonctionnels oxo de faible poids moléculaire, ces composés de faible poids moléculaire ne comportant pas plus de 12 atomes de carbone.

**2.** Utilisation selon la revendication 1, **caractérisée en ce que** les composés organiques polyfonctionnels oxo organiques de faible poids moléculaire ne comporte pas plus de 8 atomes de carbone, de préférence pas plus de 6 atomes de carbone.

**3.** Utilisation selon la revendication 2, **caractérisée en ce que** les composés organiques oxo organiques polyfonctionnels de faible poids moléculaire sont choisis de préférence parmi les composés ayant au moins trois groupes fonctionnels, de nouveau choisis parmi les groupes hydroxyle et/ou éther, de préférence parmi les composés ayant au moins deux groupes hydroxyle, particulièrement préférée parmi les composés ayant au moins trois groupes hydroxyle.

**4.** Utilisation selon l'une des revendications 1 à 3, **caractérisée en ce que** des polyétherpolyols et/ou des polyesterpolyols sont en outre contenus en tant que composés organiques oxo polyfonctionnels, qui ne représentent pas chacun un composé de faible poids moléculaire selon une ou plusieurs des revendications 2 à 4, et ont un poids moléculaire moyen en poids de préférence inférieur à 10 000 g/mol, particulièrement préférée inférieur à 5 000 g/mol, en particulier inférieur à 2 000 g/mol.

**5.** Utilisation selon une ou plusieurs des revendications précédentes, **caractérisée en ce que** la proportion de composés oxo polyfonctionnels est supérieure à 60 % en poids, mais de préférence pas supérieure à 80 % en poids.

**6.** Procédé de séparation de la peinture pulvérisée en excès de l'air ambiant, **caractérisé en ce que**

i) la peinture pulvérisée en excès est guidée avec l'air ambiant sur une surface de séparation mouillée par un véhicule, et
ii) une partie du véhicule qui a reçu une peinture pulvérisée en excès provenant de l'air ambiant est retirée de la surface de séparation et simultanément remplacée par une autre partie d'un même milieu de support qui ne diffère de la partie retirée uniquement par le fait que moins de peinture pulvérisée en excès est contenue dans le même volume,

**caractérisé en ce que** le milieu support contient, outre de l'eau, plus de 50 % en poids de composés organiques oxo polyfonctionnels qui sont des composés organiques ayant au moins trois groupes fonctionnels choisis parmi les groupes hydroxyle, ester et/ou éther, au moins un groupe hydroxyle étant toujours présent et un hétéroatome autre que l'oxygène étant présent sur un cinquième de ces groupes fonctionnels, au moins 80 % des composés organiques oxo polyfonctionnels par rapport au poids des composés organiques oxo polyfonctionnels sont choisis parmi des les composés polyfonctionnels oxo organique de faible poids , dans lequel ces composés de faible poids moléculaire n'ont pas plus de 12 atomes de carbone, et le milieu de support comporte une viscosité à des gradients de vitesse compris entre de 10 à 1 000 s$^{-1}$ qui est toujours supérieure à 10 mPas et le rapport entre la viscosité de repos $\eta_{10}$ et la viscosité de traitement $\eta_{100}$ n' étant pas supérieur à 10:1.

**7.** Procédé selon la revendication 6, **caractérisé en ce que**, la surface de séparation est rincée en continu avec du milieu de support et le milieu de support s'en écoule par gravité, la surface de séparation étant de préférence rincée en lamelles.

**8.** Procédé selon l'une ou les deux revendications 6 et 7, **caractérisé en ce qu'** un dépôt de film humide d'au moins 0,5 l/m$^2$, mais de préférence de moins de 2 l/m$^2$, par rapport au volume du milieu de support, est réalisé sur la surface de séparation.

**9.** Procédé selon l'une ou plusieurs des revendications 6 à 8, **caractérisé en ce que** la peinture pulvérisée en excès est chargée électrostatiquement dans l'air ambiant sous l'effet d'une tension électrique et transporté sur la surface de séparation dans le champ électrique.

**10.** Procédé selon l'une ou plusieurs des revendications 6 à 9, **caractérisé en ce que** la proportion de composés organiques oxo polyfonctionnels en pourcentage en poids, par rapport au milieu de support, de la différence de densité en g/cm$^3$ entre la peinture pulvérisée en excès et l'eau n'est pas supérieure à 400 fois, de préférence pas supérieure à 350 fois.

Abbildung 1

EP 3 371 260 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008067880 A2
- WO 2010025844 A1
- WO 2011110302 A1
- WO 2010025810 A1